# EUROPÄISCHE PATENTSCHRIFT

(11) **EP 1 587 401 B1**
(45) Veröffentlichungstag und Bekanntmachung des Hinweises auf die Patenterteilung: **26.05.2010**
(21) Anmeldenummer: 04700972.5
(22) Anmeldetag: 09.01.2004
(51) Int. Cl.: A47G 29/14

(54) **VERFAHREN ZUM DEPONIEREN VON SENDUNGEN IN EINER ELEKTRONISCHEN SCHLIESSFACHANLAGE**
METHOD FOR DEPOSITING MAIL IN AN ELECTRONIC SAFETY DEPOSIT BOX SYSTEM
PROCEDE POUR DEPOSER DES ENVOIS DANS UNE CONSIGNE ELECTRONIQUE

(30) Priorität: 14.01.2003 DE 10301137
(43) Veröffentlichungstag der Anmeldung: 26.10.2005
(73) Patentinhaber: Deutsche Post AG, 53113 Bonn (DE)
(72) Erfinder: MAYER, Boris, 53129 Bonn (DE); BIEGEL, Oliver, 65203 Wiesbaden (DE)
(74) Vertreter: Jostarndt, Hans-Dieter
(86) Internationale Anmeldenummer: PCT/DE2004/000013
(87) Internationale Veröffentlichungsnummer: WO 2004/064581

(56) Entgegenhaltungen:
- WO-A-00/51750
- WO-A-01/52199
- WO-A-02/097605
- DE-A- 10 124 707
- FR-A- 2 563 987
- US-B1- 6 344 796

## Beschreibung

Die Erfindung betrifft ein Verfahren zum Deponieren von Sendungen durch einen Zusteller in einer elektronischen Schließfachanlage mit mehreren verschließbaren Fächern.

Elektronische Schließfachanlagen mit mehreren verschließbaren Fächern zum Deponieren und Abholen von Sendungen sind bekannt. Bei den Sendungen kann es sich beispielsweise um Katalogwaren, Lebensmittel oder sonstige Sendungen handeln, die von einem Zusteller für einen bestimmten Empfänger in einem Fach der Schließfachanlage deponiert werden. Insbesondere sind Schließfachanlagen zum Deponieren und Abholen von Sendungen wie Päckchen und Pakete bekannt.

Beispielsweise beschreibt die französische Patentanmeldung FR 2 563 987 eine Schließfachanlage, die wenigstens ein verschließbares Fach, Eingabe- und Anzeigemittel und eine Verbindung zu einem entfernten Rechner aufweist. Die Patentanmeldung offenbart das Grundprinzip eines Verfahrens zum Betreiben von verschließbaren Fächern in diversen Ausführungsformen.

Die US-Patentschrift US 6,344,796 B1 offenbart ferner ein Depot zur Lagerung und Abholung von Sendungen, wobei die verwedete vorrichtung mehrere verschließbare Fächer aufweist. Zur Zugriffskontrolle der Fächer wird ein spezifisches Verfahren der Codevergabe und -überprüfung verwendet. Der Zusteller kann dabei ein freies Fach zugewiesen bekommen oder er wählt ein freies Fach aus.

Die internationale Patentanmeldung WO 00/51750 A1 beschreibt beispielsweise eine Schließfachanlage zur Aufnahme von Paketsendungen mit einem zugehörigen verfahren, bei dem Empfänger- und Paketdaten erfasst werden, um für ein zu lieferndes Paket ein entsprechendes Fach einer Anlage zu reservieren. Bei der Zustellung entriegelt eine Steuereinheit das reservierte Fach. Stellt sich heraus, dass das Fach beispielsweise zu klein für die angelieferte Sendung ist, verriegelt die Steuereinrichtung das ursprünglich reservierte Fach und entriegelt ein Fach der nächsten Größe.

Die internationale Patentanmeldung WO 01/52199 A2 offenbart eine elektronische Schließfachanlage mit mehreren Fächern zur Aufnahme von Sendungen. Bei der Zustellung einer Sendung erfolgt eine Identifikation des Zustellers. Nach erfolgreicher Identifikation öffnet eine Steuereinrichtung ein reserviertes oder freies von der Größe passendes Fach. Das Fach wird nach Einbringung einer Sendung automatisch oder von Hand geschlossen.

Die internationale Patentanmeldung WO 02/097605 A1 beschreibt eine Schließfachanlage zur Aufnahme von Sendungen, wobei das zugehörige Verfahren eine Identifikation des Zustellers vorsieht. Nach einer erfolgreichen Identifikation öffnet eine Steuereinheit ein einzelnes Fachschloss oder eine Gruppe von Fachschlössern. Dabei werden vorzugsweise mehrere Fächer gleichzeitig geöffnet.

Bei derartigen Schließfachanlagen identifiziert sich ein Zusteller typischerweise an der Schließfachanlage und wählt an einem Eingabemittel einen Modus für das Deponieren von Sendungen aus. Daraufhin öffnet der Zusteller ein erstes Fach, wobei das Öffnen auch automatisch geschehen kann, so dass eine Tür aufspringt. Der Zusteller bringt die erste Sendung in das Fach ein, wobei bei diesem Vorgang oftmals Informationen in Form von Identcodes oder anderen Zeichenfolgen erfasst werden, welche der Sendung zugeordnet sind. Nach erfolgter Beladung schließt der Zusteller das Fach und bestätigt den Beladungsvorgang, wodurch das Fach als belegt verbucht wird. Danach öffnet der Zusteller das nächste Fach und der Vorgang wiederholt sich mit allen Einzelschritten.

Beim Deponieren einer größeren Anzahl von Sendungen in mehreren Fächern einer Anlage ist der gesamte Beladungsvorgang aufgrund diverser Verfahrensschritte pro Fach sehr zeitintensiv. Dies kann zusätzlich zum negativen Zeitfaktor zu einer Belastung der Zusteller führen, was wiederum Fehler beim Betrieb der Schließfachanlage zur Folge haben kann. Beispielsweise werden Pakete falsch eingestellt, Pakete vergessen oder Informationen nicht korrekt erfasst. Diese Nachteile können nicht nur bei Schließfachanlagen im postalischen Betrieb, sondern auch bei jeglichen anderen Schließfachanlagen, die von Zustellern beladen werden, auftreten.

Aufgabe der Erfindung ist es daher, ein Verfahren zum Deponieren von Sendungen in einer elektronischen Schließfachanlage bereitzustellen, bei dem die von einem Zusteller benötigte Zeit zur Beladung mehrerer Fächer gegenüber bekannten Verfahren reduziert wird.

Erfindungsgemäß wird diese Aufgabe dadurch gelost, dass bei einem Verfahren zum Deponieren von Sendungen durch einen Zusteller in einer elektronischen Schließfachanlage mit mehreren verschließbaren Fächern wobei, Steuermittel der Schließfachanlage veranlassen, dass sich zum Deponieren von Sendungen ein oder mehrere Fächer öffnen,
dass wenn ein neues leeres Fach verfügbar ist, sich automatisch wenigstens ein neues Fach öffnet, sobald vom Zusteller das oder eines von mehreren geöffneten Fächer geschlossen wird und Erfassungsmittel der Schließfachanlage vor dem Öffnen des wenigstens einen neuen Faches Informationen erfasst haben, wobei die Informationen der deponierten Sendung zugeordnet sind und das Öffnen des wenigstens einen neuen Faches vom Zusteller nicht durch weitere manuelle Eingaben initiiert werden muss.

Die Anzahl der Fächer, die sich am Anfang des Beladungsvorgangs öffnen, kann in den Steuermitteln gespeichert werden. Beispielsweise kann sich nur ein leeres Fach oder leere Fächer verschiedener Größen öffnen. Eine Schließfachanlage weist typischerweise Fächer mit unterschiedlichen Abmessungen zur Aufnahme verschiedener Größen von Sendungen auf. Die Auswahl der am Anfang zu öffnenden Fachgrößen kann ebenfalls in den Steuermitteln gespeichert sein.

In einer weiteren möglichen Ausführungsform der Erfindung kann der Zusteller die Anzahl und Größen der zu öffnenden Fächer beispielsweise zu Beginn des Beladungsvorgangs wählen.

Die Erfindung sieht ferner vor, dass sich automatisch ein neues Fach öffnet, sobald der Zusteller ein Fach schließt und Erfassungsmittel zuvor einer Sendung zugeordnete Informationen erfasst haben. Bei diesen Informationen handelt es sich beispielsweise um einen oder mehrere Identcodes oder sonstige Zeichenfolgen. Unter den Begriff Erfassungsmittel fallen dabei jegliche zur Erfassung von Informationen geeignete Mittel, wie beispielsweise Scanner zum Einlesen von Codes, Tastaturen zum Eingeben von Zeichenfolgen oder Touchscreens.

Schließt ein Zusteller ein Fach, bevor einer Sendung zugehörige Informationen erfasst wurden, hat es sich als zweckmäßig erwiesen, dass sich das Fach automatisch wieder öffnet. So kann beispielsweise verhindert werden, dass eine Sendung durch den Schließ- und gleichzeitigen Bestätigungsvorgang in einem Fach als gelagert abgespeichert wird, obwohl gar keine Sendung eingebracht wurde. Schließt der Zusteller dagegen ein Fach, nachdem die zu der deponierten Sendung gehörigen Informationen ordnungsgemäß erfasst wurden, wird das Schließen des Faches als Bestätigung gewertet und das Fach als belegt verbucht. Der Zusteller muss den Vorgang an den Eingabemitteln nicht nochmals bestätigen und den Beginn der Beladung des nächsten Faches initiieren, sondern dies geschieht erfindungsgemäß automatisch.

Eine besonders bevorzugte Ausführungsform der Erfindung zeichnet sich dadurch aus, dass bei Auswahl einer Beendigungs-Funktion der Beladungsvorgang beendet wird.

In einem besonders bevorzugten Ausführungsbeispiel der Erfindung kann der Zusteller den gesamten Beladungsvorgang nur beenden und dazu alle geöffneten Fächer nacheinander schließen, wenn er zuvor an den Eingabemitteln eine entsprechende Funktion ausgewählt hat. Nur in dem Fall wird das Schließen eines Faches nicht als Bestätigung und Buchung eines Faches verbucht. Hat er zuvor einer Sendung zugeordnete Informationen erfasst, ist ihm dies nicht möglich, da davon ausgegangen werden kann, dass eine Sendung deponiert wurde und dies nicht ohne Bestätigung und Verbuchung bleiben darf.

Ferner ist es zweckmäßig, die Erfindung so auszugestalten, dass erfasst wird, wie viel Zeit seit einem Schließen des Faches und/oder einer sonstigen Bedienung der Schließfachanlage verstrichen ist und dass bei Überschreiten eines vorgebbaren Zeitintervalls der Beladungsvorgang beendet wird.

Das vorgebbare Zeitintervall ist frei wählbar und beträgt vorzugsweise zwischen 15 Sekunden und zwei Minuten, wobei Werte zwischen 30 und 90 Sekunden besonders bevorzugt sind.

Eine besonders zweckmäßige Ausgestaltung des Verfahrens sieht vor, die Schließfachanlage so auszugestalten, dass nach Verstreichen des Zeitintervalls keine weiteren Fächer geöffnet und/oder geschlossen werden können.

Durch diese Maßnahme wird verhindert, dass missbräuchliche Gegenstände in die Paketfachanlage gebracht werden können. Außerdem lässt sich hierdurch die automatische Beendigung des Beladungsvorgangs auf eine besonders einfache und zweckmäßige weise realisieren.

Eine elektronische Schließfachanlage zur Durchführung des erfindungsgemäßen Verfahrens zum Deponieren von Sendungen durch einen Zusteller umfasst beispielsweise Eingabemittel und Anzeigemittel zur Durchführung eines Dialogs mit dem Zusteller , wobei die Eingabemittel in Verbindung mit Steuermitteln stehen, und die Schließfachanlage mehrere verschließbare Fächer mit Verriegelungsmitteln aufweist, wobei die Verriegelungsmittel von den Steuermitteln aufgrund von gespeicherten Anweisungen und über die Eingabemittel eingegebenen Informationen ansteuerbar sind.

Bei den gespeicherten Anweisungen handelt es sich beispielsweise um Anzahl und Größe der zu öffnenden Fächer am Anfang des Beladungsvorgangs. Bei den über die Eingabemittel eingegebenen Informationen kann es sich um manuell durch den Zusteller gewählte Anzahlen und/oder die Auswahl eines Beladungsmodus handeln.

Weitere Vorteile, Besonderheiten und zweckmäßige Weiterbildungen der Erfindung ergeben sich aus den Unteransprüchen und der nachfolgenden Beschreibung bevorzugter Ausführungsbeispiele der Erfindung.

In einem besonders bevorzugten Ausführungsbeispiel der Erfindung identifiziert sich ein Zusteller an einer elektronischen Schließfachanlage und loggt sich damit zu Beginn des Beladungsvorgangs in die Steuerung der Schließfachanlage ein. Die Identifizierung kann durch verschiedene bekannte Identifizierungsverfahren erfolgen. Beispielsweise kommt das Eingeben eines Codes oder das Einlesen einer Karte in Betracht.

Elektronische Schließfachanlagen umfassen typischerweise Mittel zur Steuerung der Anlage in verschiedenen Modi. Zu ... diesen Steuerungsmitteln zählen beispielsweise Computermittel und mechanische und/oder elektronische Schaltungen, durch welche die Schließfachanlage betrieben wird. Insbesondere werden durch die Steuermittel Verriegelungsmittel der Fachtüren angesteuert und so Fächer geöffnet und geschlossen. Ferner stehen die Steuermittel in Verbindung mit Eingabe- und Anzeigemitteln wie Monitoren, Tastaturen und/oder Touchscreens. Mit diesen Eingabe- und Anzeigemitteln führt der Zusteller einen Dialog mit der Schließfachanlage.

Zum Deponieren von Sendungen wählt er beispielsweise den Modus "Pakete zustellen" aus. In den Steuermitteln können Informationen darüber gespeichert werden, wie viele Fächer sich am Anfang dieses gewählten Modus öffnen sollen. Es hat sich beispielsweise als zweckmäßig erwiesen, dass sich dem Zusteller jeweils ein Fach einer vorhandenen Größe öffnet. So hat er zu Beginn für alle möglichen Sendungsgrößen ein geeignetes Fach zur Verfügung. Weist die Schließfachanlage beispielsweise drei verschiedene Fachgrößen auf, würde sich für jede Größe jeweils ein Fach öffnen.

Es kann jedoch auch vorteilhaft sein, dass die Auswahl der Fachanzahl und -größe individuell durch den Zusteller erfolgt. Weiß der Zusteller beispielsweise, dass er für den folgenden Beladungsvorgang nur bestimmte Fachgrößen benötigt, kann er diese auswählen. In diesem Fall würde der Zusteller die gewünschten Fächer über die Eingabemittel an die Steuermittel der Schließfachanlage übermitteln, welche die Information umsetzen und die gewünschte Anzahl bzw. Fachgrößen öffnet.

In beiden Fällen öffnen sich nun ein oder mehrere leere Fächer zum Deponieren von Sendungen.

Bei den zu deponierenden Sendungen kann es sich beispielsweise um verschiedene Arten mit damit verbundenen Verfahrensschritten handeln. In typischen Logistiksystemen, beispielsweise im postalischen Bereich, sind Paketen oder Päckchen Identifizierungsmittel wie Codes zugeordnet, um den Weg einer betreffenden Sendung möglichst effektiv steuern und verfolgen zu können. Herkömmlicherweise muss ein derartiger Code von Erfassungsmitteln einer Schließfachanlage erfasst werden, wenn eine Sendung deponiert wird. Beispielsweise wird eine Postnummer in Form eines eingescannten Codes oder einer über eine Tastatur eingegebenen Zeichenfolge erfasst.

Während die Erfassung einer die Sendung identifizierende Postnummer zweckmäßigerweise für jede Sendung vorgesehen ist, können auch Sendungen auftreten, welche zusätzlich mit einem speziellen Identcode versehen sind, der vor der Einbringung ebenfalls eingescannt werden muss. Ferner kann es sich um Nachnahmesendungen mit einzugebenden Nachnahmebeträgen oder jegliche weitere Spezialsendung mit zusätzlichen Schritten handeln.

Am Ende jedes Beladungsvorgangs schließt der Zusteller das Fach, was als Bestätigung des Vorgangs gilt. Die Bestätigung gilt in einer besonders bevorzugten Ausführung zur Verbuchung des Faches als belegt. Es sind somit keine weiteren manuellen Bestätigungen durch den Zusteller erforderlich, was den Zeitbedarf für die Beladung pro Fach senkt. Außerdem geht erfindungsgemäß nach dem Schließen eines Faches automatisch ein neues Fach auf, so dass auch das Öffnen eines neuen Faches nicht vom Zusteller durch weitere manuelle Eingaben initiiert werden muss. Dies bringt eine weitere Zeitersparnis mit sich.

Zusätzlich zur Zeitreduzierung bringt das automatische Bestätigen und Öffnen den Vorteil mit sich, dass sich die durchzuführenden Schritte für den Zusteller vereinfachen und reduzieren, und er dadurch entlastet wird. Dies erhöht wiederum seine Konzentration, so dass beim Beladen weniger Fehler passieren. In der Praxis hat sich gezeigt, dass Zusteller mit den Arbeitsabläufen an einer Schließfachanlage so vertraut sind, dass die zugehörigen Eingabe- und Anzeigemittel oftmals langsamer arbeiten, als der Zusteller für den nächsten Schritt bereit ist. Dies kann zu Ungeduld und damit zu Unkonzentriertheit beim Zusteller führen. Besonders beim Beladen einer Schließfachanlage mit einer großen Anzahl von Sendungen sind es sich immer wiederholende Vorgänge, die einzeln initiiert und bestätigt werden müssen, durch die Belastung und Zeitaufwand steigen.

Die erfindungsgemäße Reduzierung der Verfahrens- und Arbeitsschritte führt demnach zu einer Beschleunigung des Beladungsvorgangs, zur Entlastung des Zustellers und zur Reduzierung von Fehlerpotentialen. Um das aufeinander folgende Beladen von bereits geöffneten Fächern zu kontrollieren und Fehler zu vermeiden, können in Ausführungsformen der Erfindung zweckmäßige Weiterbildungen vorgesehen werden.

Es ist beispielsweise vorteilhaft, dass das neue Fach, welches nach dem Schließen eines Faches geöffnet wird, die gleichen Abmessungen hat wie das zuvor geschlossene. Dabei wird davon ausgegangen, dass eine Schließfachanlage typischerweise verschiedene Größen von Fächern aufweist, so dass Sendungen mit verschiedenen Abmessungen aufgenommen werden können, wobei der verfügbare Raum bestmöglich ausgenutzt wird. Kleine Sendungen werden daher vorzugsweise in kleine Fächer eingebracht, so dass kein Raum in größeren Fächern verschwendet wird. Werden die Steuermittel so programmiert, dass sie am Anfang eine bestimmte Auswahl an Größen öffnen, ist es zweckmäßig, dem Zusteller für jedes geschlossene Fach ein Fach der gleichen Größe anzubieten, so dass er immer die gleiche Auswahl an Größen zur Verfügung hat. Für den Fall, dass kein Fach der Größe verfügbar ist, kommt das Öffnen eines nächst größeren Faches in Frage. Es kann ferner vorgesehen sein, dass der Zusteller beispielsweise über ein Display darüber informiert wird und das weitere Vorgehen wählen kann.

Da das Schließen eines Faches als Bestätigung des Beladungsvorgangs gewertet wird, besteht die Gefahr, dass ein Zusteller ein Fach irrtümlicherweise schließt, obwohl beispielsweise gar keine Sendung von ihm eingebracht wurde oder erforderliche Informationen noch nicht erfasst wurden. Es ist daher vorteilhaft, dass das Schließen eines Faches nur dann als Bestätigung gewertet wird, wenn zuvor alle erforderlichen Informationen erfasst wurden. Dazu zählt in diesem besonders bevorzugten Ausführungsbeispiel der Erfindung eine Postnummer, die für jede Sendung eingescannt oder eingegeben wird. Ist dies noch nicht erfolgt, ist es vorteilhaft, dass das Fach automatisch wieder aufspringt und sich somit nicht schließen lässt. So wird kein nicht vorhandenes Paket als "gelagert" verbucht und für eingebrachte Sendungen können keine wichtigen Informationen vergessen werden.

Um den gesamten Beladungsvorgang zu beenden und alle noch geöffneten Fächer schließen zu können, muss der Zusteller dies an die Steuermittel der Schließfachanlage übermitteln, da sich die Fächer sonst nicht schließen lassen. Er kann dazu an den Eingabemitteln eine entsprechende Funktion, beispielsweise "Beladung beenden", auswählen. Nun lassen sich die Fächer schließen, ohne dass der Vorgang als Bestätigung für die Einlagerung einer Sendung gewertet wird. Dies setzt jedoch voraus, dass zuvor keine Informationen einer Sendung erfasst wurden, da dies bedeuten würde, dass es sich doch um eine Bestätigung einer Beladung handelt.

Ist trotz allem ein Fehler beim Beladen der Fächer aufgetreten, kann dazu eine weitere Funktion, beispielsweise "Storno", vorgesehen sein, welche es dem Zusteller erlaubt, ein inkorrekt beladenes Fach zu öffnen und die Belegung zu korrigieren. Der erfolgte Vorgang wird dadurch rückgängig gemacht und das betreffende Fach springt automatisch auf.

## Patentansprüche

1. Verfahren zum Deponieren von Sendungen durch einen Zusteller in einer elektronischen Schließfachanlage mit mehreren verschließbaren Fächern, wobei Steuermittel der Schließfachanlage veranlassen, dass sich zum Deponieren von Sendungen ein oder mehrere Fächer öffnen,
**dadurch gekennzeichnet,**
**dass** wenn ein neues leeres Fach verfügbar ist, sich automatisch wenigstens ein neues Fach öffnet, sobald vom Zusteller das oder eines von mehreren geöffneten Fächer geschlossen wird und Erfassungsmittel der Schließfachanlage vor dem Öffnen des wenigstens einen neuen Faches Informationen erfasst haben, wobei die Informationen der deponierten Sendung zugeordnet sind und das Öffnen des wenigstens einen neuen Faches vom Zusteller nicht durch weitere manuelle Eingaben initiiert werden muss.

2. Verfahren nach Anspruch 1,
**dadurch gekennzeichnet,**
**dass** bei Auswahl einer Beendigungs-Funktion der Beladungsvorgang beendet wird.

3. Verfahren nach Anspruch 1,
**dadurch gekennzeichnet,**
**dass** erfasst wird, wie viel Zeit seit einem Schließen des Faches und/oder einer sonstigen Bedienung der Schließfachanlage verstrichen ist und dass bei Überschreiten eines vorgebbaren Zeitintervalls der Beladungsvorgang beendet wird.

4. Verfahren nach einem oder mehreren der vorangegangenen Ansprüche,
**dadurch gekennzeichnet,**
**dass** das Schließen eines Faches von den Steuermitteln der Schließfachanlage als Bestätigung des Beladungsvorgangs des jeweiligen Faches gewertet wird, so dass das Fach als belegt gebucht wird.

5. Verfahren nach einem oder mehreren der vorangegangenen Ansprüche,
**dadurch gekennzeichnet,**
**dass** es sich bei den erfassten Informationen einer Sendung um einen oder mehrere Codes handelt, die eingescannt werden.

6. Verfahren nach einem oder mehreren der vorangegangenen Ansprüche,
**dadurch gekennzeichnet,**
**dass** es sich bei den erfassten Informationen einer Sendung um wenigstens eine Zeichenfolge handelt, die vom Zusteller in Eingabemittel der Schließfachanlage eingegeben wird.

7. Verfahren nach einem oder mehreren der vorangegangenen Ansprüche,
**dadurch gekennzeichnet,**
**dass** das neue, automatisch geöffnete Fach die gleichen Abmessungen hat wie das zuvor geschlossene Fach.

8. Verfahren nach Anspruch 7,
**dadurch gekennzeichnet,**
**dass** sich ein Fach der nächst tieferen oder nächst höheren Größe öffnet, falls innerhalb der Schließfachanlage kein leeres Fach der Größe des zuvor geschlossenen Faches verfügbar ist.

9. Verfahren nach Anspruch 7,
**dadurch gekennzeichnet,**
**dass** der Zusteller die weitere Vorgehensweise an den Eingabemitteln auswählt, falls innerhalb der Schließfachanlage kein leeres Fach der Größe des zuvor geschlossenen Faches verfügbar ist.

10. Verfahren nach einem oder mehreren der vorangegangenen Ansprüche,
**dadurch gekennzeichnet,**
**dass** sich kein Fach öffnet, falls innerhalb der Schließfachanlage kein weiteres leeres Fach jeglicher Größe verfügbar ist.

11. Verfahren nach einem oder mehreren der vorangegangenen Ansprüche,
**dadurch gekennzeichnet,**
**dass** der Zusteller den Beladungsvorgang noch geöffneter Fächer beendet, indem er eine entsprechende Funktion an einem Eingabemittel der Schließfachanlage auswählt und die betreffenden Fächer schließt, wobei die Steuermittel der Schließfachanlage keine Öffnung weiterer Fächer veranlassen.

12. Verfahren nach einem oder mehreren der vorangegangenen Ansprüche,
**dadurch gekennzeichnet,**
**dass** die Steuermittel der Schließfachanlage veranlassen, dass ein geöffnetes Fach vom Zusteller nur geschlossen werden kann, wenn zuvor Informationen erfasst wurden, die einer Sendung zugeordnet sind.

13. Verfahren nach einem oder mehreren der vorangegangenen Ansprüche,
**dadurch gekennzeichnet,**
**dass** die Steuermittel der Schließfachanlage veranlassen, dass ein Fach automatisch wieder aufspringt, wenn keine Informationen erfasst werden oder wurden, die einer Sendung zugeordnet sind.

14. Verfahren nach einem oder mehreren der vorangegangenen Ansprüche,
**dadurch gekennzeichnet,**
**dass** der Zusteller die Beladung eines Faches durch Auswahl einer Funktion an einem Eingabemittel der Schließfachanlage storniert, woraufhin sich das betreffende Fach öffnet.

## Claims

1. A method for depositing shipments by a deliverer into an electronic locker system having several lockable compartments, whereby control means of the locker system cause one or more compartments to open up for the depositing of shipments,
**characterized in that,**
when a new empty compartment becomes available, at least one new compartment opens automatically as soon as the compartment or one of several opened compartments is closed by the deliverer, and recording means of the locker system have recorded information before the opening of the at least one new compartment, whereby the information is associated with the deposited shipment and the opening of the at least one new compartment does not have to be initiated by the deliverer through additional manual input.

2. The method according to Claim 1,
**characterized in that**
the filling procedure is terminated when a termination function is selected.

3. The method according to Claim 1,
**characterized in that**
the amount of time that has lapsed since the compartment was closed and/or since the locker system was operated in any other way is recorded and **in that** the filling procedure is terminated once a predefinable time interval is exceeded.

4. The method according to one or more of the preceding claims,
**characterized in that**
the closing of a compartment by the control means of the locker system is construed as a confirmation of the filling procedure of the compartment in question, so that the compartment is logged as having been filled.

5. The method according to one or more of the preceding claims,
**characterized in that**
the recorded information about the shipment comprises one or more codes that are scanned in.

6. The method according to one or more of the preceding claims,
**characterized in that**
the recorded information about the shipment comprises at least one character string that is entered by the deliverer into input means of the locker system.

7. The method according to one or more of the preceding claims,
**characterized in that**
the new automatically opened compartment has the same dimensions as the one that was previously closed.

8. The method according to Claim 7,
**characterized in that**
a compartment of the next-smaller or next-larger size opens up if no empty compartment in the size of the previously closed compartment is available in the locker system.

9. The method according to Claim 7,
**characterized in that**
the deliverer selects the further course of action at the input means if no empty compartment in the size of the previously closed compartment is available in the locker system.

10. The method according to one or more of the preceding claims,
**characterized in that**
no compartment opens up if no more empty compartments of any size whatsoever are available in the locker system.

11. The method according to one or more of the preceding claims,
**characterized in that**
the deliverer terminates the filling procedure of still-opened compartments by selecting an appropriate function at an input means of the locker system and by closing the compartments in question, whereby the control means of the locker system does not cause any more compartments to open.

12. The method according to one or more of the preceding claims,
**characterized in that**
the control means of the locker system only allows the deliverer to close an opened compartment if information associated with the shipment has previously been recorded.

13. The method according to one or more of the preceding claims,
**characterized in that**
the control means of the locker system causes a compartment to automatically open up once again if no information associated with the shipment is or has been recorded.

14. The method according to one or more of the preceding claims,
**characterized in that**
the deliverer cancels the filling of a compartment by selecting a function at an input means of the locker system, in response to which the compartment in question opens up.

## Revendications

1. Procédé pour déposer des envois, par l'intermédiaire d'un distributeur, dans une consigne électronique comportant plusieurs casiers verrouillables, des moyens de commande de la consigne faisant s'ouvrir un ou plusieurs casiers pour permettre le dépôt d'envois, **caractérisé en ce que**, lorsqu'un nouveau casier vide est disponible, au moins un nouveau casier s'ouvre automatiquement dès que le distributeur ferme le casier ouvert ou l'un de plusieurs casiers ouverts et que des moyens de détection de la consigne ont saisi des informations avant l'ouverture de l'au moins un nouveau casier, les informations étant associées à l'envoi déposé et l'ouverture de l'au moins un nouveau casier ne devant pas être initialisée par le distributeur par d'autres saisies manuelles.

2. Procédé selon la revendication 1, **caractérisé en ce que** l'opération de chargement est terminée par la sélection d'une fonction de terminaison.

3. Procédé selon la revendication 1, **caractérisé par** la saisie du temps qui s'est écoulé depuis une fermeture du casier et/ou une autre manipulation de la consigne et en ce que l'opération de chargement se termine au dépassement d'un intervalle de temps prédéterminable.

4. Procédé selon l'une ou plusieurs des revendications précédentes, **caractérisé en ce que** la fermeture d'un casier est évaluée par les moyens de commande de la consigne comme confirmation de l'opération de chargement du casier respectif de sorte que le casier est enregistré comme occupé.

5. Procédé selon l'une ou plusieurs des revendications précédentes, **caractérisé en ce que** les informations d'un envoi saisies sont un ou plusieurs codes qui passent au scanner.

6. Procédé selon l'une ou plusieurs des revendications précédentes, **caractérisé en ce que** les informations d'un envoi saisies sont au moins une suite de signes qui est entrée par le distributeur dans des moyens de saisie de la consigne.

7. Procédé selon l'une ou plusieurs des revendications précédentes, **caractérisé en ce que** le nouveau casier ouvert automatiquement a les mêmes dimensions que le casier fermé préalablement.

8. Procédé selon la revendication 7, **caractérisé en ce qu'**un casier de taille directement inférieure ou supérieure s'ouvre si aucun casier vide de la taille du casier fermé préalablement n'est disponible dans la consigne.

9. Procédé selon la revendication 7, **caractérisé en ce que** le distributeur sélectionne la suite de la marche à suivre au niveau des moyens de saisie si aucun casier vide de la taille du casier fermé préalablement n'est disponible dans la consigne.

10. Procédé selon l'une ou plusieurs des revendications précédentes, **caractérisé en ce qu'**aucun casier ne s'ouvre si aucun autre casier vide, quelle que soit sa taille, n'est disponible dans la consigne.

11. Procédé selon l'une ou plusieurs des revendications précédentes, **caractérisé en ce que** le distributeur termine l'opération de chargement de casiers encore ouverts en sélectionnant une fonction adéquate sur un moyen de saisie de la consigne et ferme les casiers concernés, les moyens de commande de la consigne ne faisant pas s'ouvrir d'autres casiers.

12. Procédé selon l'une ou plusieurs des revendications précédentes, **caractérisé en ce que** les moyens de commande de la consigne font en sorte qu'un casier ouvert ne peut être fermé par le distributeur que si des informations associées à un envoi ont été saisies préalablement.

13. Procédé selon l'une ou plusieurs des revendications précédentes, **caractérisé en ce que** les moyens de commande de la consigne font en sorte qu'un casier s'ouvre de nouveau automatiquement si aucune information associée à un envoi n'est ou n'a été saisie.

14. Procédé selon l'une ou plusieurs des revendications précédentes, **caractérisé en ce que** le distributeur annule le chargement d'un casier en sélectionnant une fonction sur un moyen de saisie de la consigne, suite à quoi le casier concerné s'ouvre.
